# EUROPEAN PATENT APPLICATION

(11) **EP 0 864 983 A2**
(43) Date of publication of application: **16.09.1998**
(21) Application number: 98104607.1
(22) Date of filing: 13.03.1998
(51) Int. Cl.: G06F 12/14

(54) **Computer system including memory adress management circuit for protecting memory from illegal writing**

(30) Priority: 14.03.1997 JP 82330/97
(71) Applicant: NEC CORPORATION, Tokyo (JP)
(72) Inventor: Katsuta, Hiroshi, Minato-ku, Tokyo (JP)
(74) Representative: von Samson-Himmelstjerna, Friedrich R., Dipl.-Phys.

(57) **Abstract**

A circuit for protecting a memory irrespective rewriting has an access converter (2) receiving a UM signal (9), a memory address from CPU (1), and address mask signal (8) from a region specifying register (4). The UM signal (9) is at a logical value 0, the memory address (6) on an address bus (5) is supplied to a memory (3) as a memory address (6) as it is, while, when the UM signal (9) is at a logical value 1, a memory address (6) is generated by masking predetermined upper bits of an address on the address bus (5) to a logical value 0 with a condintion specified in the region specifying register (4), and supplied to the memory (3).

## Description

### BACKGROUND OF THE INVENTION

### Field of the Invention

The present invention relates to a computer system and more particularly a computer system including a memory address management circuit for protecting a memory from an irrespective writing.

### Description of the Prior Art

In a computer system with a memory, when illegal write is performed by an application program for a memory, particularly, in a system regions such as a kernel of an operating system, it causes a serious or a critical effect on the system, and may sometimes cause a system-down.

As a conventional memory protecting scheme for preventing such illegal memory access in a system, there is known a scheme in which access rights for the memory is hierarchized in the system to prevent write access to the system region from a lower level in the system.

For example, Japanese Patent Application Laid-Open No. 1-231148 proposes an arrangement shown in FIG. 5 as a scheme in which, when an access in an absolute address mode is detected to be write to a region to which write in a page address mode is inhibited, the access in the absolute address mode is inhibited, whereby illegal write to the memory by software can be quickly detected and preventedto protect content of the memory.

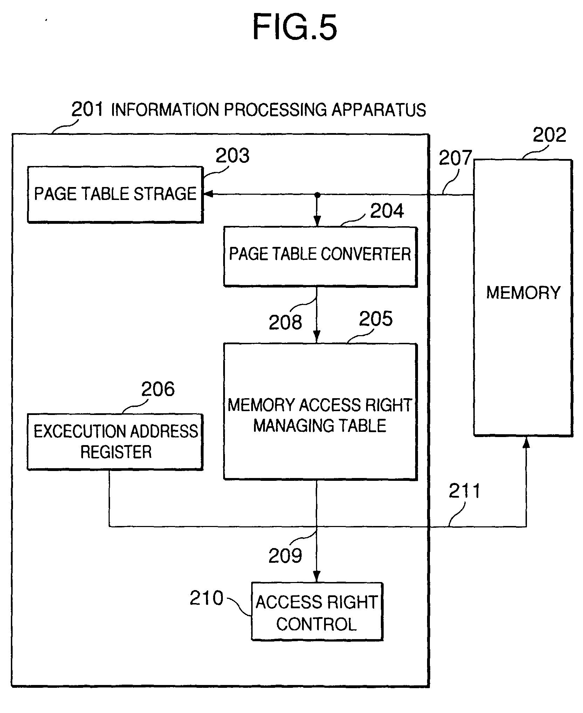

In Figure 5, when an information processing apparatus 201 starts an memory access operation, a page table controlling an access to a memory 202 is read from the memory 202 through a data line 207, and stored in a page table storage 203.

At the same time, a page table converter 204 fetches from the page table read from the memory 202 a memory access right to the region of the memory 202 in which the page is stored, determines a storage location in a memory access right management table 205 from the page address of the page table, sends the storage location and the memory access right to the memory access right management table 205 through a memory access right management table control line 208, and stores the memory access right in the memory access right management table 205. The memory access right to the memory region is sent to an access right controller 210 through a memory access right read line 209.

Here, since content of the page table storage 203 is rewritten, as required, the memory access right management table 205 is also rewritten at the same time when the page table storage 203 is rewritten. The access right controller 210 assures validity of an access to the memory 202 by an address stored in an execution address register 206 based on the content of the memory access right sent from the memory access right management table 205, and, if the access is determined to be an illegal access from a lower privilege level or the like, discontinues access to the memory 202 by the address stored in the execution address register 206.

### BRIEF SUMMARY OF THE INVENTION

However, the conventional memory protecting scheme describes above requires processes of reading of the page table, extraction of the memory access right, and update of the memory access right management table 209 from generation of a memory access request to determination of the access right. These processes becomes a bottleneck particularly in a memory access to random addresses, and causes a problem that they require much processing time, thereby preventing increase of operating frequency.

Even if the storage location of page table is constituted by dedicated hardware, instead of on the memory 202 as in the conventional memory protecting scheme, control circuitry becomes complicated, making the scale of hardware very large, so that it constitutes a bottleneck in increasing the operating frequency.

Therefore, the present invention is made to eliminate the problems of the prior art, and is intended to provide a device and method for protecting a memory which implement access inhibit control for a predetermined range of addresses with a minimum hardware configuration masking an access address to a memory.

To attain the above object, the memory protecting device of the present invention comprises a first mode for protecting a memory access and a second mode not for protecting a memory access, mode specifying means for switching the mode to one of such two modes, and address converting means for fixing at least one bit of the memory address to a specific logic value when the first mode is specified.

In the present invention, the specific logic value of the memory address in the address converting means fixes all bits to "0".

Alternatively, in the present invention, the specific logic value of the memory address in the address converting means fixes all bits to "1".

In addition, the present invention is a memory protecting device comprising a first mode for protecting a memory access and a second mode not for protecting a memory access, mode specifying means for switching the mode to one of such two modes, address converting means for fixing at least one bit of the memory address to a specific logic value when the first mode is specified, and region specifying means for specifying a region connected to and protected by the address converting means.

Furthermore, in the present invention, the region specifying means may configure a region specifying condition to be capable of being programmably changed.

Still further, a method for protecting a memory of the present invention comprises the steps of performing control of a memory access right in a protection mode by masking a predetermined bit of a memory address, and, for a memory access to an access invalided region, by converting the address, and forcibly switching the access to an access to a predetermined access valided region.

### BRIEF DESCRIPTION OF THE DRAWINGS

This above-mentioned and other objects, features and advantages of this invention will become more apparent by reference to the following detailed description of the invention taken in conjunction with the accompanying drawings, wherein:
FIG. 1 is a block diagram showing an arrangement of a memory protecting device of an embodiment according to the present invention;
FIG. 2 is an arrangement of an address converting circuit 2 of an embodiment according to the present invention;
FIG. 3 is a diagram for illustrating an address conversion operation of an embodiment according to the present invention;
FIG. 4 is a memory map by address conversion in an embodiment according to the present invention; and
FIG. 5 is an arrangement of a conventional memory protection device.

### DETAILED DESCRIPTION OF THE PREFERRED EMBODIMENTS

An embodiment of the present invention is described below. In a preferred embodiment, the present invention comprises a first mode in which all predetermined address spaces in a memory device are made access valided regions, and a second mode (called a "protected mode") in which only partial address spaces in the predetermined address spaces of the memory device are made access valided regions, and remaining regions are made access invalided regions. The first and second modes can be freely switched by a mode switching control signal. The present invention further comprises means for, in the first mode, supplying a memory address output from a CPU the memory device as it is, and for, in the second mode, performing mask operation processing, which fixes predetermined bits of a memory address output from the CPU to, for example, a logic value "0", for a memory access to an access invalided region of the memory device, to convert a memory address output from the CPU to an access to an access valided region.

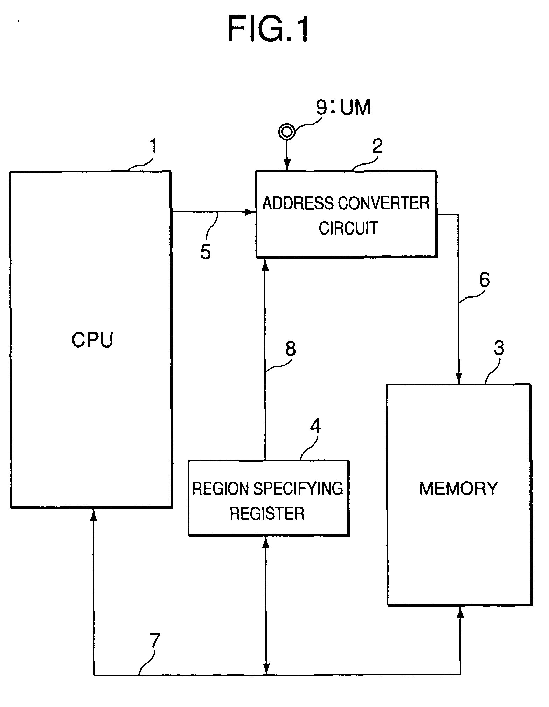

In a preferred embodiment of the present invention, the means for specifying a region (a region specifying register 3 in FIG. 1) is preferably configured to be capable of variably changing a region specifying condition.

To further understand the present invention, the present invention is described in terms of an embodiment by referring to the drawings.

FIG. 1 shows an arrangement of an embodiment of a memory protection device according to the present invention in a block diagram. Referring to FIG. 1, in the embodiment, a CPU 1 outputs 16-bit addresses A 15-A 0 through an address bus 5, and outputs a read/write control signal (not shown) to a memory 3 to perform data access through a data bus 7. For example, the memory 3 is used an IN-CIRCUIT-EMULATOR (ICE) to store program for operating system like a kernel and a user program for application to be defined by each user. The addresses on the address bus 5 are converted into memory addresses 6 (MA 15-MA 0) in an address converting circuit 2, and connected to the memory 3. It is a matter of course in the present invention that an address signal is not limited to a 16-bit signal.

Accessing methods to the memory 3 include an accessing method with two modes, a user mode and a non-user mode. The user mode is activated when the application program performs, and the non-user mode is activated when the user mode is inactivated. The address converting circuit 2 is connected to a user mode (UM) signal 9 for specifying the accessing method to the memory 3, and eight address mask signals 8 (R 15-R 8) which are outputs of a region specifying register 4 for specifying an access region in the user mode. The region specifying register 4 can set a register value by instruction processing in the CPU 1.

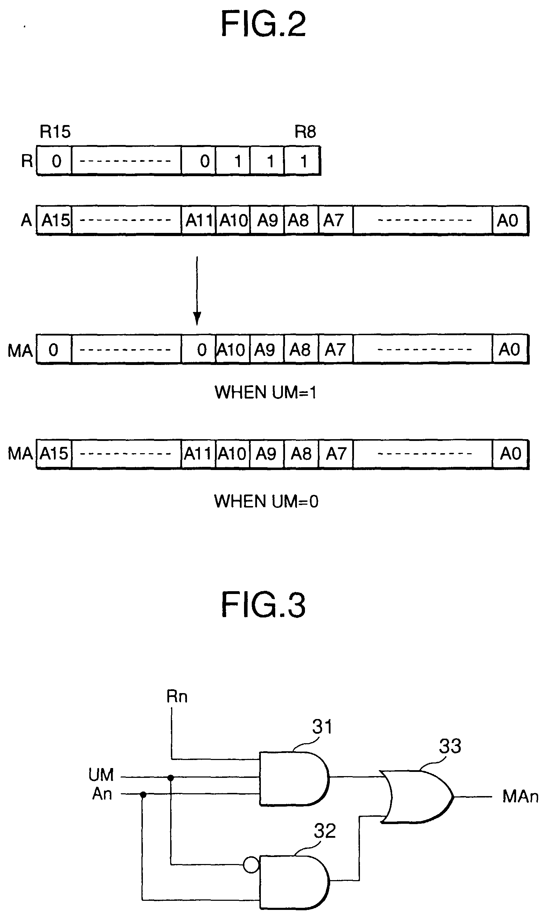

FIG. 3 is a detailed circuit diagram of the address converting circuit 2 in one bit of address (An). Upper eight bits A 15-A 8 of an address from the CPU 1 are input to a three-input AND gate 31 and a two-input AND gate 32. The AND gates 31 and 32 is input with the UM signal 9, and either one of the AND gates is selected depending on the state of the UM signal 9. More particularly, when the UM signal 9 is at a logical value "1", the AND gate 31 is selected, and logically multiplied with the bits An of the addresses A 15-A 8 in the AND gate 31 which receives as input each bit Rn (n=15-8) of the address mask signal 8 from the region specifying register 4. On the other hand, when the UM signal 9 is at a logical value "0", the AND gate 32 is selected, and each bit An of the addresses A 15-A 8 becomes output of the AND gate 32 as it is.

Outputs of the AND gates 31 and 32 are logically added at the OR gate 33, and output from the address converting circuit 2 as a memory address 6 (MA n, where n is 15-8).

Here, the lower bits A 7-A 0 of the address from the CPU 1 become outputs of the lower eight bits (MA 7-MA 0) of the memory address 6 as it is.

FIG. 2 shows an example of address conversion operation in the embodiment. The region specifying registers 4 (F 15-R 8) are set with "00000111B" (B indicating binary) by an instruction from the CPU 1.

When the UM signal 9 is at a logical value "1", each bit of the upper eight bits A 15-A 8 of the addresses A 15-A 0 is logically multiplied with each bit R 15-R 8 of the region specifying registers 4. Then, "0", "0", "0", "0", "0", A 10, A 9, and A 8 become upper eight bits of the memory address 6, while A 7, A 6, A 5, A 4, A 3, A 2, A 1, and A 0 become lower eight bits of the memory address 6.

Consequently, as the memory addresses 6, "0", "0", "0", "0", "0", A 10, A 9, A 8, A 7, A 6, A 5, A 4, A 3, A 2, A 1, and A 0 upper five bits of which are masked to the logic value "0" are output to the addresses A 15-A 0 from the CPU 1 as MA 15-MA 0.

On the other hand, when the UM signal 9 is at a logical value "0", values of the addresses A 15-A 0 are output as MA 15-MA 0 as it is.

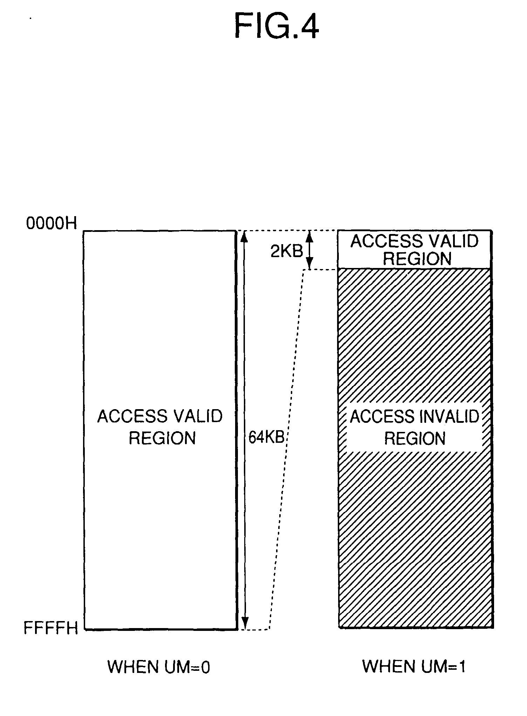

FIG. 4 is a memory map through address conversion in the embodiment, and illustrates a memory space.

When the UM signal 9 is at a logical value "0", that is, in the non-user mode, addressing is allowed for all 64 Kilo bytes of the 16-bit address space of the CPU 1, while, when the UM signal 9 is at a logical value "1", that is, in the user mode, addressing is allowed for only lower 11 bit addresses of the 16-bit address space of the CPU 1, that is, only the region of lower 2 Kilo bytes. In this case, regardless of what an address is generated to A 15-A 12 for an address signal from the CPU 1, upper five bits are forcibly masked to a logical value "0", so that a memory access can be performed only to the region of lower 2 Kilo bytes. Other regions are invalided for access from a program, that is, are protected.

In the embodiment, it is possible to implement an operation for switching the access right level of the user and non-user modes in software such as an operating system by controlling the UM signal 9. In addition, a region to be protected can be programmably tailored from the CPU 1 depending on a value set in the region specifying register 4.

While the embodiment has been described for a case where the upper address is fixed to a logical value "0" by way of an example, it may be fixed to a logical value "1" by using a simple logic circuit similar to that of the embodiment.

In addition, it is a matter of course that not only conversion control is performed for upper addresses from the most significant bit (MSB) of an address, but also similar address conversion control may be performed for any one or more bits of an address.

As described above, the memory protecting device of the present invention implements control of a memory access right in the protected mode in such a manner that, for a memory access to regions other than a predetermined region valided for an access, an address is converted by masking the memory address to forcibly switch the access to an access to the predetermined access valided region, and provides a perfect protection capability although it has a simple logic gate circuit arrangement.

Then, according to the present invention, cost saving is attained by making it possible to arrange the device with a simple logic gate circuit. Thus, the present invention can attain a significant advantages with its economic effect, and with the fact that performance degradation due to provision of the memory controller can be minimized because the present invention little affect the memory access processing time, and provides very high practical value.

## Claims

1. A circuit comprising:
a central processing unit (1) outputting a memory
address;
a memory (3); and
an address converter (2) masking at least one bit of said memory address based on a mask data and transferring said masked memory address (6) to said memory (3) when a first mode is requested, and transferring said memory address to said memory (3) without masking when a second mode is requested.

2. The circuit as claimed in claim 1 further comprising a register storing said mask data and said stored mask data being rewrote by said CPU (1).

3. The circuit as claimed in claim 1, wherein said memory (3) stores an application program and a program for an operating system, said first mode is activated when said application program is carried out, and said second mode is activated when said application program is stopped.

4. The circuit as claimed in claim 1 wherein said memory (3) stores an application program and a program for an operating system, and said mask data for protecting said program for said operating system from rewriting.

5. A circuit comprising:
a terminal receiving a first mode for protecting a memory access and a second mode not for protecting a memory access,
address coverter (2) masking at least one bit of the memory address to a specific logic value when said first mode is specified, and
region specifying register (4) for specifying a region protected by said address converting means (2).

6. The circuit as claimed in claim 5, wherein said region specifying register (4) configure a region specifying condition to be capable of being programmably changed.

7. The circuit as set forth in claim 5, wherein said address converter (2) outputs said memory address (6) as it is in said second mode, and, in said first mode, masks at least one bit of said memory address to a specific logic value through a logical operation of region specifying information of said region specifying means (4) and each bit information of a predetermined bit field of a memory address.

8. A circuit comprising:
a central processing unit (1);
a memory (3); and
an address converter (2) allowing a device access to all address spaces in said memory (3) in a first mode, and allowing said device access to an access valided region of said all address spaces in said memory (3);
said address converter (2) supplying a memory address output from a CPU (1) being to said memory device (3) as it is in said first mode, and masking predetermined bits of a memory address output from said CPU (1) for a memory access in said second mode, thereby, for an access invalided region of said memory device (3), address converting a memory address output from said CPU (1) to an access to an access valided region.
